# EUROPEAN PATENT APPLICATION

(11) **EP 4 541 445 A1**
(43) Date of publication of application: **23.04.2025**
(21) Application number: 23203978.4
(22) Date of filing: 17.10.2023
(51) Int. Cl.: B01D 24/04, B01D 15/36, B01D 24/12, B01D 24/40, B01J 47/022

(54) **MULTIPURPOSE FILTER UNIT FOR COOLANT**

(71) Applicant: Airbus Operations GmbH, 21129 Hamburg (DE)
(72) Inventor: Trümper, Torsten, 21129 Hamburg (DE); Rosenbrock, Lennart, 21129 Hamburg (DE)

(57) **Abstract**

The present disclosure relates to a filter unit (100) for a liquid coolant. The filter unit (100) comprises a main body (110) forming an interior space, and at least a filter cage (120) arranged in the interior space of the main body and dividing the interior space into a top portion (112) and a bottom portion (114) of the main body (110). The filter unit (100) further comprises a deionising filter material (125) provided on the filter cage (120) and in at least a part of the top portion (112) of the main body. A cross-sectional area of an inlet (102) at a top of the main body is smaller than a cross-sectional area of the top portion (112) of the main body.

## Description

The present disclosure generally relates to a filter unit for a liquid coolant, as well as a cooling circuit and an aircraft comprising the same. Particularly, the present disclosure relates to a filter unit having an increasing cross-section in a top portion and a deionising filter material. The present disclosure further relates to a cooling circuit having such filter unit, and an aircraft having such cooling circuit and/or filter unit.

A conventional cooling circuit sometimes includes a particle filter to remove any particles that may have entered or built-up in the cooling circuit, or an air vent configured to release air bubbles from the coolant. In certain application cases of a cooling circuit, ions have to be removed from the coolant. For example, if the coolant comes into contact with electrically sensitive components, such as a fuel cell to be cooled, an ion removing device is installed in the cooling circuit, too.

It is an object of the present disclosure to provide a simplified and lightweight cooling circuit.

This object is solved by the present invention as defined in the independent claims. Preferred embodiments are defined by the dependent claims.

According to a first aspect to better understand the present disclosure, a filter unit for a liquid coolant comprises a main body forming an interior space, an inlet at a top of the main body, an outlet at a bottom of the main body, and a filter cage arranged in the interior space of the main body and dividing the interior space into a top portion and a bottom portion of the main body. Dividing the interior space includes fluidically separating the top portion from the bottom portion to such an extent that any liquid flowing from the top portion to the bottom portion of the main body has to pass the filter cage.

Specifically, the filter unit further comprises a deionising filter material provided on or in the filter cage and in at least a part of the top portion of the main body. Moreover, a cross-sectional area of the inlet at the top of the main body is smaller than a cross-sectional area of the top portion of the main body.

This allows reducing a flow speed of the liquid coolant from the inlet and entering the interior space of the main body due to the widened cross-sectional area. A reduced flow speed allows air bubbles to rise, for example, rise against a flow of coolant through the inlet and through the main body. At the top portion of the main body, such air bubbles can be collected, i.e., can be removed from the coolant.

As a mere example, a proportion (proportional relationship) between the cross-sectional area of the inlet and the cross-sectional area of the top portion of the main body can be selected based on the flow speed of the coolant upstream of the filter unit, e.g., directly at the inlet of the filter unit, and a flow speed of the coolant inside of the main body, i.e. through the filter material. For instance, in order to release air bubbles from the coolant, the flow speed inside of the main body can be equal to or less than 0.5 m/s, preferably equal to or less than 0.2 m/s, and most preferably equal to or less than 0.1 m/s. The proportion of the cross-sections can then be determined based on the flow speed of the coolant in the cooling circuit upstream of the filter unit and the flow speed to be achieved in the main body taking into account the moving volume of coolant in both sections.

Furthermore, due to the deionising filter material, the coolant passing from the top portion to the bottom portion of the main body is deionised. At the same time the filter material can filter particles from the coolant. In other words, a deionising component and a filter component are combined or integrated to one another, so that the disclosed filter unit and, hence, the cooling circuit can be built smaller and lighter.

Moreover, the coolant streaming in or flowing through the filter material can be turbulence-free, which allows smaller (micro) bubbles in the interior space of the main body (i.e., the filter material) to combine into larger bubbles and rise to the top portion of the main body. For instance, the filter material can achieve such turbulence-free moving by forming small channels between the filter material.

The present disclosure, therefore, provides for a venting filter unit fulfilling three functions: air ventilation of the coolant, particle filtration of the coolant, and deionising (deionisation of) the coolant. Instead of three separate/individual components as in conventional cooling circuits, which require respective space and maintenance efforts, a single unit achieving all functions at once can be provided and installed in a cooling circuit. This renders the cooling circuit lighter and reduces maintenance efforts significantly. It is further possible to reduce the space required for maintenance work, since only one unit needs to be accessible.

In an implementation variant, the deionising filter material is a deionising resin, such as a 1:1 mixed bed of anion and cation resin, e.g. in OH- / H+ form. Such filter material can be provided in granular form having an approximate round shape with a granulate particle size of 0,5 to 2 mm. This allows forming micro bubbles having a size (diameter) of 0,01 to 0,2 mm.

In another implementation variant, the filter cage can span throughout the interior space of the main body. In other words, the filter cage provides a separation between the top portion and the bottom portion of the main body. This separation applies at least to the filter material, so that the filter cage carries or holds the filter material. It is to be understood that the filter cage can be permeable for the coolant, but holds back the filter material.

In a further implementation variant, the filter cage can have a conical or pyramidal form. The form of the filter cage depends on the cross-sectional shape of the main body, as the filter cage spans the entire main body. As a mere example, the main body can have a cylindrical shape, so that its cross-section is circular or at least elliptical. In such case, the filter cage also has a circular or elliptical base and, hence, a conical form. On the other hand, if the main body has a cubic shape and, hence, a rectangular cross-sectional form, the filter cage can have a rectangular base and, hence, a pyramidal form.

In yet another implementation variant, the filter cage can be a separate filter device including the deionising filter material and an inlet allowing coolant to enter an interior space of the filter device. Such filter device can be inserted into the main body in a fluid tight manner. This allows replacing the filter device like a cartridge, in order to replace the filter material in a fast manner.

In an implementation variant, the inlet can include a pipe extending into the main body from the top of the main body and to the filter cage. Furthermore, the inlet pipe can have at least one opening providing a fluid connection between an interior of the pipe and the interior space of the main body. This allows the coolant to flow into the interior space of the main body and to reduce its flow speed.

In a further implementation variant, the at least one opening in the inlet pipe can be covered by the deionising filter material. In other words, the inlet pipe reaches into the interior space of the main body to such an extent that a portion of the inlet pipe including the at least one opening is in the filter material, i.e., is covered by the filter material.

In yet a further implementation variant, the at least one opening in the inlet pipe can be covered by a coarse mesh. The mesh size of the coarse mesh can depend on the particle size of the filter material, so that the filter material does not enter the inlet pipe. On the other hand, the mesh size of the coarse mesh can be large enough for particles in the coolant (of an expected or experienced size) to leave the inlet pipe and enter the filter material. It is to be understood that the mesh size of the coarse mesh can likewise be selected to provide a prefilter for particles in the coolant being larger than a predefined size.

In another implementation variant, the filter cage can include at least one opening. The at least one opening in the filter cage allows coolant to leave the top portion of the main body, i.e., to be released from the filter material.

In yet another implementation variant, the at least one opening in the filter cage can be covered by a fine mesh. The mesh size of the fine mesh is smaller than the mesh size of the coarse mesh. This allows providing a "final" filter for particles in the coolant.

In a further implementation variant, the at least one opening in the filter cage can be covered by a permeable membrane. Such membrane is permeable for the coolant, but holds back particles in the coolant and the filter material, and preferably holds back micro air bubbles in the coolant.

In yet a further implementation variant, the filter cage can be made at least partially from a permeable membrane. Such membrane is permeable for the coolant but holds back particles in the coolant and the filter material, and preferably holds back micro air bubbles in the coolant. Such membrane can further be flexible, so that the filter cage membrane fits the cross-section of the main body.

In an implementation variant, the filter unit can further comprise a coolant and/or air vent duct fluidly connected to the top portion of the main body. Thus, any air bubbles rising to the top of the main body can be collected and released as a coolant contaminated with air bubbles or as air via the coolant and/or air vent duct. Thus, the event duct can carry coolant comprising air bubbles and/or can allow only air to be vented from the interior space of the main body, for example, if a larger amount of air has been accumulated therein.

In a further implementation variant, the filter unit can further comprise an optional throttle configured to throttle a coolant and/or air stream through the coolant and/or air vent duct. The throttle may be used to control a flow rate of the coolant and/or air through the event duct, as well as a pressure in the interior space of the main body.

In another implementation variant, the coolant and/or air vent duct can be fluidly connected to an accumulator configured to collect liquid and gaseous coolant. Thus, a (final) removal of air from the coolant can be achieved in the accumulator. In addition, the accumulator can further function as a (pressure) equalising tank in the cooling circuit. Such accumulator can be present in any conventional cooling circuit, so that it may be employed by the disclosed filter unit as an air release device.

Alternatively or additionally, the filter unit can further comprise an air vent opening in the coolant and/or air vent duct, wherein the air vent opening fluidly connects the interior of the coolant and/or air vent duct with the ambient environment, into which the air removed from the coolant can simply be released. This requires means to separate liquid coolant from the gaseous air. Such separating means can be provided in the interior of the tank, in the coolant and/or air vent duct, or as a separate means at an end of the coolant and/or air vent duct, such as a small thank comparable to the accumulator.

In an implementation variant, the filter unit can further comprise a flowmeter configured to measure a flow of coolant through the filter unit, preferably, through the outlet. This does not only allow monitoring the flow through the venting filter unit in general, but also to determine a degree of clogging of the filter, for example, if the flow (speed and/or amount) of coolant decreases. The flowmeter can, hence, replace a flowmeter, that may be required in the cooling circuit anyway.

In an implementation variant, the filter unit can further comprise a pressure sensor configured to measure a pressure in the interior space of the main body. This does not only allow monitoring the pressure of the coolant in the cooling circuit, but particularly in the filter unit. An increase of pressure in the interior space of the main body and a decreasing flow (e.g., measured by the flowmeter) may be used to determine a clogging of the filter unit.

In an implementation variant, the filter unit can further comprise a temperature sensor configured to measure a temperature of the coolant in the interior space of the main body. The temperature sensor, hence, may allow omitting the temperature sensor at a different position of the cooling circuit, particularly, if such temperature sensor is required in the cooling circuit anyway.

According to a second aspect to better understand the present disclosure, a cooling system comprises a cooling circuit configured to circulate a coolant, a conveying device configured to convey the coolant through the cooling circuit, and at least one filter unit, according to the first aspect or one or more of its variants. The at least one filter unit is connected to the cooling circuit to receive conveyed coolant at the inlet and release filtered coolant into the cooling circuit at the outlet.

Such cooling circuit can be lightweight, as the disclosed filter unit replaces three separate conventional components, i.e., an air vent unit, a filter device, and a deionising device. Since replacing the at least one filter unit avoids replacing three separate conventional components, the maintenance effort is likewise reduced.

In an implementation variant, the cooling system can further comprise a coolant accumulator duct fluidly connecting a sump of an accumulator configured to collect liquid and gaseous coolant with a portion of the cooling circuit upstream of the conveying device. In other words, the cooling system further comprises an accumulator and the accumulator duct fluidly connects the sump of the accumulator with a portion of the cooling circuit. Such accumulator can, amongst others, function as an equalising tank, for example, equalising a pressure in the cooling circuit.

In an implementation variant, the coolant and/or air vent duct of the at least one filter unit can be fluidly connected with the accumulator, so that air removed from the coolant in the at least one filter unit and/or coolant still comprising air (bubbles) can enter the accumulator. This facilitates equalising the pressure in the cooling circuit.

According to a third aspect to better understand the present disclosure, an aircraft comprises at least one filter unit, according to the first aspect or one or more of its variants.

Alternatively or additionally, the aircraft can comprise a cooling system, according to the second aspect or one or more of its variants.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a cooling system having a filter unit; and
- Figure 2: schematically illustrates an aircraft comprising such cooling system.

In the following description, for purposes of explanation and not limitation, specific details are set forth in order to provide a thorough understanding of the present disclosure. It will be apparent to one skilled in the art that the present disclosure may be practiced in other implementations that depart from these specific details.

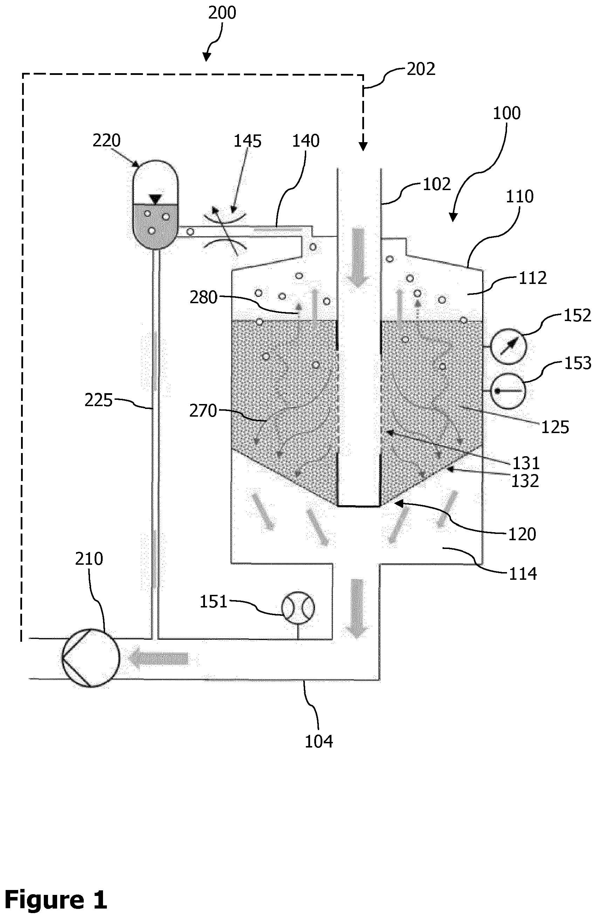

Figure 1 schematically illustrates a cooling system 200 including a filter unit 100 in a cooling circuit 202. The cooling circuit 202 is only schematically illustrated as a circuit having a conveying device 210 configured to convey coolant through the cooling circuit 202 and an accumulator 220 fluidly connected with the cooling circuit 202 via a coolant accumulator duct 225, while further components of the cooling system 200 (such as a heat source and heat sink) are omitted for brevity reasons.

The cooling system 200 comprises a filter unit 100, particularly for a liquid coolant. The filter unit 100 comprises a main body 110 forming an interior space. The main body 110 can form the exterior form and appearance of the entire filter unit 100. The filter unit 100 further comprises an inlet 102 at a top of the main body 110 and an outlet 104 at a bottom of the main body 110. It is to be understood that top and bottom in the present disclosure relates to directions relative to a vertical axis, when the filter unit 100 is installed in the cooling system 200. Thus, gravity can be used to separate air from liquid coolant as will be explained in more detail below.

The filter unit 100 further comprises a filter cage 120 arranged in the interior space of the main body 110 and dividing the interior space into a top portion 112 and a bottom portion 114 of the main body 110. The filter cage 120 is exemplarily illustrated as having a conical or pyramidal form with a sump region at the bottom. This is only one form of a plurality of possible filter cage forms. The filter cage 120 can span throughout the interior space of the main body 110, and can hold a filter material 125 illustrated as a grey pattern in Figure 1.

The filter material 125 is a deionising filter material 125 provided on or in the filter cage 120 and in at least a part of the top portion 112 of the main body 110. Thus, any liquid coolant entering the inlet 102 will flow through the deionising filter material 125 before reaching the bottom portion 114 of the main body 110 and the outlet 104. The deionising filter material 125 can be a deionising resin. Such resin removes ions from the liquid coolant by an electrochemical reaction. For instance, any filter material 125 that binds electrons or releases an electron to electrically neutralise the coolant can be employed.

As the resin 125 degrades over time, the filter unit 100 has to be replaced with a fresh filter unit (including fresh deionising filter material 125). This may be achieved by releasing the filter unit 100 at the inlet 102 and outlet 104 from the remaining cooling circuit 202. As a mere example, a coupling or fitting (not illustrated) may be opened, so that the filter unit 100 can be removed. In addition, closing valves (not illustrated) may be provided in the cooling circuit 202 at the inlet 102 and the outlet 104 of the filter unit 100, to facilitate replacement of the filter unit without coolant loss.

The cross-sectional area of the inlet 102 at the top of the main body 110 is smaller than a cross-sectional area of the top portion 112 of the main body 110. Alternatively or additionally, the cross-sectional area of the inlet 102 can be smaller than a cross-sectional area of the main body 110 in an area of the filter cage 120 and/or in an area of the deionising filter material 125. This allows a reduction of the flow speed of the coolant entering through the inlet 102, so that any air bubbles in the coolant can be released and removed from the liquid coolant. This is illustrated in Figure 1 as arrows 280 from the deionising filter material 125 towards the top portion 112. The liquid coolant flows (by gravity and/or a pressure difference between the top portion 112 and the bottom portion 114 of the main body 110) towards the bottom portion 114 and outlet 104, which is illustrated in Figure 1 as arrows 270.

The deionising filter material 125 can be provided in granular form, which further allows micro air bubbles in the liquid coolant to collect and combined in the channels between the granulate particles, which allows the then larger air bubbles to move towards the top portion 112.

The filter unit 100 is exemplarily illustrated as having an inlet 102 including a pipe extending into the main body from the top (portion) of the main body 110 and to the filter cage 120. As a mere example, the pipe of the inlet 102 (also referred to as the inlet pipe) can abut against the filter cage 120 and/or can form a portion of the filter cage 120. As a further example, the filter cage 120 can be a (flexible) membrane that spans between inner sides of the main body 110 and over the inlet pipe.

Alternatively, the filter cage 120 and filter material 125 may be housed in a separate housing (not explicitly illustrated) inserted into the main body 110, wherein such housing can comprise the inlet pipe.

In any case, the inlet pipe can have at least one opening 131 providing a fluid connection between an interior of the inlet pipe and the interior space of the main body, for instance, the region including the filter material 125. Thus, the liquid coolant including air bubbles directly enters into the filter material, where its flow speed is reduced, the liquid coolant is deionised, particles in the liquid coolant are filtered, and the air bubbles, including micro bubbles, can stream upwards (arrow 280).

The at least one opening 131 of the inlet pipe can be covered by a coarse mesh, which allows pre-filtering of the liquid coolant and also allows holding back the filter material 125 from entering the inlet pipe. The at least one opening 131 in the inlet pipe is illustrated in Figure 1 as a dashed line for illustrative purposes only.

As a mere example, the at least one opening 131 of the inlet pipe can be arranged above a lowest point (sump) of the inlet pipe. This forms a trap for larger particles in the coolant that will be caught in the inlet pipe and do not clog the filter material 125.

The filter cage 120 can further include at least one opening 132 configured to allow liquid coolant to leave the filter material 125 and enter the bottom portion 114 of the main body 110. As a mere example, the at least one opening 132 in the filter cage 120 can be covered by a fine mesh. A mesh size of the fine mesh is smaller than a mesh size of the course mesh, which facilitates filtering the liquid coolant. Alternatively, the entire filter cage 120 is formed of such mesh or a coolant permeable membrane.

The coolant including air bubbles collected in the top portion 112 (illustrated as circular bubbles) and/or air that has collected in the top portion 112 may be released through a coolant and/or air vent duct 140 of the filter unit 100. Such coolant and/or air vent duct 140 can be fluidly connected to the top portion 112 of the main body 110. The coolant and/or air vent duct 140 may either be open to the ambient environment, in order to release air into the environment. Alternatively and as illustrated, the coolant and/or air vent duct 140 can be fluidly connected to the accumulator 220, which may already be equipped with an air release vent (not illustrated). Thus, coolant comprising air bubbles (illustrated as circular bubbles) can be guided from the top portion 112 through the vent duct 140 into the accumulator 220, where the liquid coolant and the air is finally separated. A throttle 145 may be provided in the coolant and/or air vent duct 140 and can be configured to throttle a coolant and/or air stream through the coolant and/or air vent duct 140.

The filter unit 100 can further be equipped with one or more sensors. Figure 1 exemplarily illustrates a flowmeter 151 configured to measure a flow of coolant through the filter unit 100, such as at an outlet 104, a pressure sensor 152 and a temperature sensor 153. It is to be understood that only one, two or all of these sensors may be provided with the filter unit 100. The pressure sensor 152 and the temperature sensor 153 are respectively configured to measure a pressure and temperature in the interior space of the main body 110, particularly of the coolant therein.

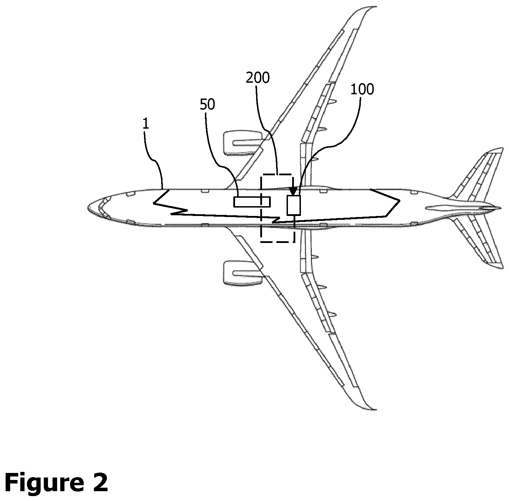

Figure 2 schematically illustrates an aircraft 1 comprising at least one cooling system 200 comprising a filter unit 100. For instance, the cooling system 200 and/or filter unit 100 of Figure 1 can be installed in the aircraft 1.

The aircraft 1 can comprise a device that is to be cooled. Figure 2 illustrates, as a mere example, a fuel cell 50 that is to be cooled by the cooling circuit 200. Deionising the coolant with the deionising filter material 125 of the filter unit 100 in the cooling circuit 200 facilitates operation of the fuel cell 50. As can be derived from Figure 2, maintenance effort for the cooling system 200 is significantly reduced, as only the filter unit 100 has to be accessed, for example, for replacement. Once in place, the filter unit 100 provides for particle filtration, deionisation, and air venting of the liquid coolant in the cooling circuit 202.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A filter unit (100) for a liquid coolant, comprising:
a main body (110) forming an interior space;
an inlet (102) at a top of the main body (110);
an outlet (104) at a bottom of the main body (110); and
a filter cage (120) arranged in the interior space of the main body and dividing the interior space into a top portion (112) and a bottom portion (114) of the main body (110),
**characterised in that**
the filter unit further comprises a deionising filter material (125) provided on the filter cage (120) and in at least a part of the top portion (112) of the main body, and
a cross-sectional area of the inlet (102) at the top of the main body is smaller than a cross-sectional area of the top portion (112) of the main body.

2. The filter unit (100) of claim 1, wherein the filter cage (120) spans throughout the interior space of the main body, and
wherein, preferably, the filter cage (120) has a conical or pyramidal form.

3. The filter unit (100) of claim 1 or 2, wherein the inlet (102) includes a pipe extending into the main body from the top of the main body (110) and to the filter cage (120), and wherein the inlet pipe has at least one opening (131) providing a fluid connection between an interior of the pipe and the interior space of the main body.

4. The filter unit (100) of claim 3, wherein the at least one opening (131) in the inlet pipe is covered by the deionising filter material (125), and/or
wherein the at least one opening (131) in the inlet pipe is covered by a coarse mesh.

5. The filter unit (100) of one of claims 1 to 4, wherein the filter cage (120) includes at least one opening (132),
wherein, preferably, the at least one opening (132) in the filter cage is covered by a fine mesh.

6. The filter unit (100) of one of claims 1 to 5, further comprising:
a coolant and/or air vent duct (140) fluidly connected to the top portion (112) of the main body, and
an optional throttle (145) configured to throttle a coolant and/or air stream through the coolant and/or air vent duct (140).

7. The filter unit (100) of claim 6, wherein the coolant and/or air vent duct (140) is fluidly connected to an accumulator (220) configured to collect liquid and gaseous coolant.

8. The filter unit (100) of one of claims 1 to 7, further comprising:
a flowmeter (151) configured to measure a flow of coolant through the filter unit, preferably, through the outlet (104); and/or
a pressure sensor (152) configured to measure a pressure in the interior space of the main body (110); and/or
a temperature sensor (153) configured to measure a temperature of the coolant in the interior space of the main body.

9. A cooling system (200), comprising:
a cooling circuit (202) configured to circulate a coolant;
a conveying device (210) configured to convey the coolant through the cooling circuit (202); and
at least one filter unit (100), according to one of claims 1 to 8, connected to the cooling circuit (202) to receive conveyed coolant at the inlet (102) and release filtered coolant into the cooling circuit (202) at the outlet (104).

10. The cooling system (200) of claim 9, further comprising:
an accumulator configured to collect liquid and gaseous coolant; and
a coolant accumulator duct (225) fluidly connecting a sump of the accumulator with a portion of the cooling circuit (202) upstream of the conveying device (210).

11. An aircraft (1), comprising:
at least one filter unit (100) according to one of claims 1 to 8; and/or
a cooling system (200), according to one of claims 9 and 10.
